# EUROPEAN PATENT APPLICATION

(11) **EP 1 580 697 A2**
(43) Date of publication of application: **28.09.2005**
(21) Application number: 05005431.1
(22) Date of filing: 12.03.2005
(51) Int. Cl.: G07C 9/00

(54) **Mobile terminal and operating method therefor**

(30) Priority: 22.03.2004 KR 2004019390
(71) Applicant: LG ELECTRONICS INC., Seoul (KR)
(72) Inventor: Kang, Hyo Sup, Seoul (KR); Kim, Taek Soo, Seoul (KR)
(74) Representative: Rupprecht, Kay

(57) **Abstract**

A mobile terminal and an operating method therefor are provided. The mobile terminal has a fingerprint identification unit. The fingerprint identification unit operates in a fingerprint verification mode or a direction data read mode. In case direction data is generated, a movement of a mouse pointer, a movement of a screen, and a drawing operation are performed depending on the direction data.

## Description

### BACKGROUND OF THE INVENTION

### Field of the Invention

The present invention relates to a mobile terminal having an identification sensor that uses direction data, more particularly, the mobile terminal has a fingerprint identification unit for detecting direction data based on at least one fingerprint movement of a user.

### Description of the Related Art

Methods for monitoring biometrics have gained increased importance to protect information or verify identification of individuals. A biometrics system uses distinguishing characteristics of an individual's face, fingerprint, hand shape, vein, iris, retina, signature and voice. A single biometrics system operates in the following way.

A user enrolls in the biometrics system. A biometrics reader reads features, i.e., distinguishes characteristics of the user such as fingerprints, and extracts and stores the features in a database. Verification of the extracted features involves a biometric matching process.

A conventional biometric matching process compares the distinguishing characteristics of a user, such as fingerprints, with stored biometric information to determine a user's identity and system access privileges.

Much research is in progress to improve biometrics systems. Products for protecting personal information and secrets using fingerprint identification methods have increased. Conventional fingerprint identification products have been applied to a unit, such as a door lock or a work-time record management system, wherein a user is given access to the unit in response to fingerprint information extracted from a touch pad.

More recently, fingerprint identification products are mounted to units such as a personal digital assistant (PDA) or a mobile terminal to protect user information. Payments through a mobile terminal have become common. Unfortunately, a financial payment made using a mobile terminal has no independent verification process for inputted personal identification. This results in many instances in unauthorized access to an individual's personal records.

To solve this problem, studies have been performed where safe financial transactions require identification of a user's fingerprint utilizing a fingerprint input device incorporated in payment units or a mobile terminal. Conventional fingerprint devices have a sensor for inputting fingerprint information. These products have limited applicability in other fields except for identification purposes.

There is a need for a fingerprint system that provides improvements over the conventional art.

### SUMMARY OF THE INVENTION

A mobile terminal having an identification system is disclosed. The mobile terminal comprises a display unit for displaying an image, a transceiver unit for providing wireless transmission and reception, a fingerprint identification unit for detecting direction data from at least one fingerprint movement and a controller for controlling an operation to be performed in response to the direction data.

In another embodiment, an operating method is disclosed for a mobile terminal mounted with fingerprint identification unit. The method comprises generating, at the fingerprint identification unit, direction data that corresponds to a movement of a fingerprint, and moving a window on the screen of a display unit in accordance with the direction data.

In yet another embodiment, an operating method for a mobile terminal including a fingerprint identification unit is disclosed. The method comprises generating, at the fingerprint identification unit, direction data that corresponds to movement of a fingerprint, and performing a drawing operation on a fingerprint image on a display unit in accordance with the direction data.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a block diagram illustrating construction of a mobile terminal in accordance with the present invention.

Fig. 2 is an image displayed on the mobile terminal of Fig. 1 in accordance with a first embodiment of the present invention.

Fig. 3 is an image displayed on the mobile terminal of Fig. 1 in accordance with a second embodiment of the present invention.

Fig. 4 is an image displayed on the mobile terminal of Fig. 1 in accordance with a third embodiment of the present invention.

### DETAILED DESCRIPTION OF THE INVENTION

Reference will now be made in detail to the preferred embodiments of the present invention, examples of which are illustrated in the accompanying drawings.

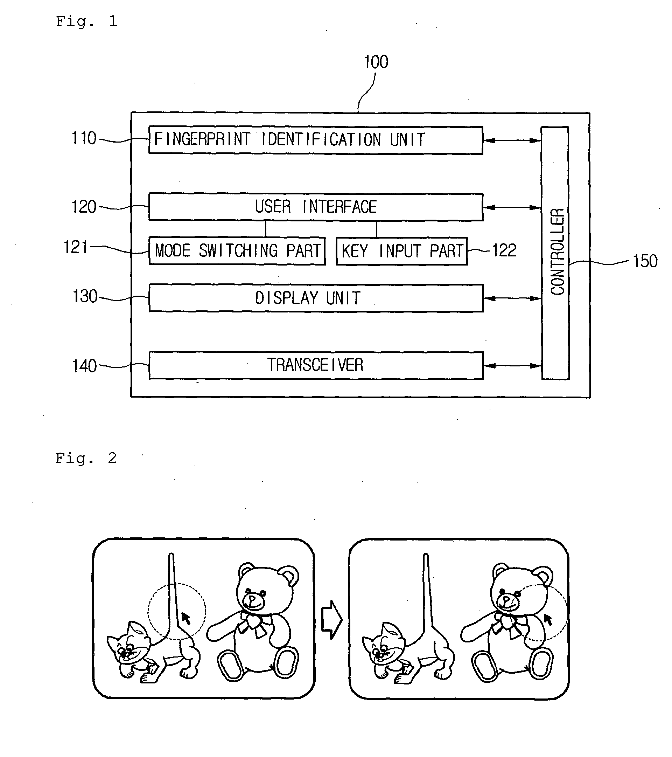

Referring to Fig. 1, the mobile terminal 100 comprises a fingerprint identification unit 110 to detect position information of a user's finger through identification of a user's fingerprint in a sweep-type mode. The position information of the user's finger is computed using direction data of the fingerprint extracted using the fingerprint unit 110. Detection and use of the direction data of the fingerprint will be described below.

The mobile terminal 100 further comprises a user interface 120 for receiving a selection of control modes from a user using the position information of the user's finger.

The user interface 120 comprises a key input part 122 receiving operational signals from a plurality of buttons on the mobile terminal. A mode switching part 121 determines whether the fingerprint is used for a fingerprint identification mode, or a direction data read mode. If the mode switching part 121 is in the direction data read mode, fingerprint direction data may be further inputted. In one example, the control mode may be combined with a mouse mode (e.g., a mouse pointer moves across the screen) and a screen mode (e.g., a window on the screen is moved across a fingerprint image).

The mode switching part 121 may select separately a first mode switching part having a fingerprint identification mode or the direction data read mode, and a second mode switching part having a pre-determined control mode.

A controller 150 performs control operations according to a selection of the control mode through a user interface 120 with reference to the information of the position of the user's finger detected utilizing the fingerprint identification unit 110. A display unit 130 displays results performed utilizing the controller 150. A transceiver unit 140 performs general communication functions within the mobile terminal.

In accordance with one aspect of the invention, a user positions a finger on the fingerprint identification unit 110 so that part of a finger's surface touches a sensor, whereby a photographed image is inputted to the fingerprint identification unit 110. It should be noted that the inputted image of the fingerprint, in this example, maybe a partial image of the fingerprint. Initial image data of the fingerprint is labeled, in this example, as image f(0).

Features of the fingerprint are extracted from the image data and stored as comparison features. During a sweep operation, a user moving his finger across the fingerprint identification unit 110 creates a two-dimensional image of his fingerprint.

Frames of partial fingerprint images, as a function of time, are photographed and inputted consecutively into the fingerprint identification unit 110. A series of the frames that are consecutively inputted are represented by the image frame series represented by f(1)~f(m)~f(M). Finger sweeps are, for example, performed over a time interval between the frames, which time is sufficiently short and creates considerable overlap of image photographs between adjacent frames. In other words, a finger sweeps across the sensor at a rate such that a value of a movement vector of the fingerprint may be accurately processed utilizing overlapped image photographs.

In this example, if a frame f(m) is inputted, f(m-1), i.e., a corresponding portion between a previous frame and a present frame is explored so that a movement vector may be computed for relative finger motion. If a number of corresponding points between the previous frame and the present frame is smaller than a pre-determined minimum required value in computing the movement vector, the user may be requested to re-input the image.

The direction data of the fingerprint is computed as the image frame is moved across the fingerprint image, section by section, using the process described above. Movement of the finger, in one example, result in a sweep pattern created utilizing a set of movement vectors across the fingerprint image.

Using the above process, it is possible to detect information for movement of the user's finger for creating a control signal for a mobile terminal or performing fingerprint identification. Thus, the present invention may be applied to numerous consumer and technology fields capable of utilizing information of a user's finger motion and user identification.

Referring to Figs. 1 and 2, the control mode maybe set to the mouse mode using the mode switching part 121. The mouse pointer is moved and displayed on the display unit 130 to display the detected position information of the user's finger. Setting the control mode to the mouse mode results in direction data information of the fingerprint being detected. In the mouse mode, identification information of the user's finger is not performed. The mobile terminal, in the mouse mode, allows the mouse pointer to be moved in accordance with movement information of the user's finger.

Referring to Fig. 2, the mouse pointer displayed on the display unit 130 is moved along a movement direction of the user's finger designated utilizing the direction data information. If the mobile terminal 100 operates in the mouse mode as described above, a menu list may be used for selecting functions of the mobile terminal 100 or a keypad to be displayed on the display unit 130. In this case, the user moves the mouse pointer to a desired position by moving his finger on the fingerprint identification unit 110. Movement of the user's finger is detected and a selected operation is performed using a click operation. During the click operation, a mouse pointer selects the menu list or a keypad in accordance with extracted position information of the user's finger. The click operation may be performed utilizing various methods, such as by strongly pressing the finger for a pre-determined period of time on the sensor to change the mouse pointer position or removing the finger from the sensor temporarily to maintain the mouse pointer position.

If the menu list or the keypad is displayed on the display unit 130, a user selects the desired menu or keypad by moving his finger on the fingerprint identification unit 110. The on-screen menu reduces the cost of a mobile terminal because an additional keypad is not required to be installed on the mobile terminal.

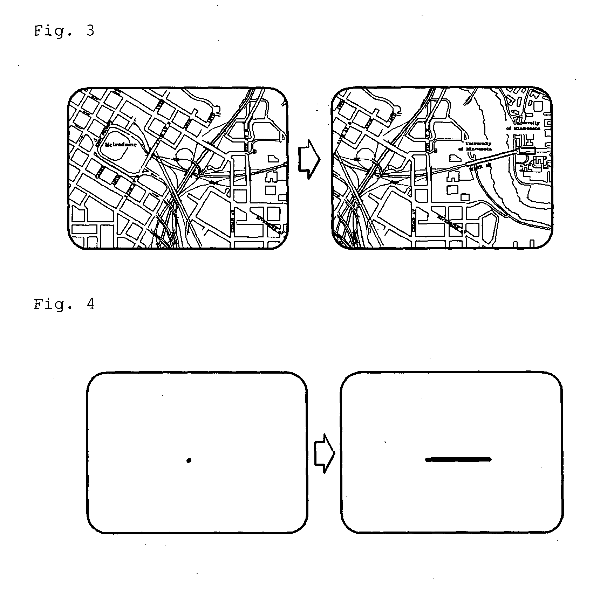

Referring to Figs. 1 and 3, if the control mode selected is the window mode, the window on the screen of the display unit 130 may be placed over a portion of the fingerprint image in accordance with the direction data. More specifically as shown in Fig. 3, a map displayed on the display unit 130 may be moved, for example in its entirety, in accordance with the movement direction of the user's finger. In summary, using the above-described method, the user may conveniently move an image, such as the map displayed on the display unit 130, to a desired direction such as up, down, right, and left using finger motion. The above-described method supports current trends whereby high quality images are supported by the mobile terminal.

Referring to Figs. 1 and 4, if the control mode selected through the user interface 120 is a drawing mode, a line may be drawn on the display unit 130 according to the direction data of the fingerprint. A picture, using the above drawing process, may be drawn.

If the user moves a finger on the fingerprint identification unit 110, a line or a picture that corresponds to movement direction may be drawn on the display unit 130 according to the movement information of the user's finger detected utilizing the fingerprint identification unit 110.

As described above, according to the mobile terminal and the operating method therefor, it is possible to provide a variety of useful application functions to the user using the information of the position of the user's finger based on the direction data of the fingerprint detected. The fingerprint identification unit performs a user verification function based on the fingerprint identification.

It will be apparent to those skilled in the art that various modifications and variations can be made in the present invention. Thus, it is intended that the present invention covers the modifications and variations of this invention provided they come within the scope of the appended claims and their equivalents.

## Claims

1. A mobile terminal comprising
a display unit for displaying an image;
a transceiver unit for allowing wireless transmission and reception;
a fingerprint identification unit for detecting direction data using at least a fingerprint movement when a position of a finger moves; and
a controller for controlling to perform a control operation that corresponds to the direction data.

2. The terminal according to claim 1, wherein the fingerprint identification unit identifies a fingerprint in a sweep type.

3. The terminal according to claim 1 or 2, wherein the control operation is performed in form of an image change on the display unit.

4. The terminal according to any of the preceding claims, wherein a control mode of the fingerprint identification unit is switched to a fingerprint verification mode for verifying a fingerprint or a direction data read mode.

5. The terminal according to any of the preceding claims, wherein the control operation comprises a mouse operation under which a mouse pointer is moved in response to a movement of the direction data.

6. The terminal according to claim 5, wherein during the mouse operation, a menu screen or a keypad is displayed on the display unit and a click operation is performed by the fingerprint identification unit.

7. The terminal according to any of the preceding claims, wherein the control operation comprises a screen movement operation during which a screen is moved according to the direction data.

8. The terminal according to any of the preceding claims, wherein the control operation comprises a drawing operation during which a drawing operation is performed according to the direction data.

9. The terminal according to claim 1, wherein the control operation is changed for each control mode.

10. The terminal according to claim 9, wherein a mode switching part for allowing the control mode to be designated from an outside is provided.
